# EUROPÄISCHE PATENTSCHRIFT

(11) **EP 2 943 845 B1**
(45) Veröffentlichungstag und Bekanntmachung des Hinweises auf die Patenterteilung: **08.03.2017**
(21) Anmeldenummer: 13798241.9
(22) Anmeldetag: 02.11.2013
(51) Int. Cl.: G05D 23/19, F24F 11/00, F24D 19/10

(54) **VORRICHTUNG UND VERFAHREN ZUM STEUERN EINER HEIZUNGS- UND/ODER KÜHLANLAGE**
APPARATUS AND METHOD FOR CONTROLLING HEATING AND/OR COOLING SYSTEMS
DISPOSITIF ET PROCÉDÉ DE COMMANDE D'UNE INSTALLATION DE CHAUFFAGE ET/OU DE RÉFRIGÉRATION

(30) Priorität: 02.11.2012 DE 102012021509
(43) Veröffentlichungstag der Anmeldung: 18.11.2015
(73) Patentinhaber: Tado GmbH, 80337 München (DE)
(72) Erfinder: GEPPERTH, Jürgen, 81539 München (DE)
(86) Internationale Anmeldenummer: PCT/EP2013/003306
(87) Internationale Veröffentlichungsnummer: WO 2014/067665

(56) Entgegenhaltungen:
- US-A- 5 751 118
- US-A1- 2009 261 767
- US-A1- 2010 211 224

## Beschreibung

### GEBIET DER ERFINDUNG

Die vorliegende Erfindung betrifft eine Vorrichtung zum Steuern einer Heizungs- und/oder Kühlanlage nach dem Oberbegriff des Anspruchs 1. Zudem betrifft die Erfindung ein Verfahren zum Steuern einer Heizungs- und/oder Kühlanlage nach dem Oberbegriff des Anspruchs 13.

Heizungs- und/oder Kühlanlagen sollen beliebige Anlagen umfassen, mit denen eine Temperatur in einem Raum oder Gebäude beeinflusst oder gesteuert werden kann. Dabei kann eine Heizungsanlage eine beliebige Anlage zum Erwärmen von Räumen oder Gebäuden darstellen. Kühlanlagen können beliebige steuerbare Anlagen zur Raumkühlung umfassen und insbesondere durch Klimaanlagen gebildet sein.

Solche Heizungs- und/oder Kühlanlagen sollen in der Regel die Temperatur in mehreren Räumen eines Gebäudes, in welchem sie installiert ist, einstellen. Hierzu wird in einem Raum, der auch als Referenzraum bezeichnet werden kann, eine Vorrichtung zum Steuern der Heizungs- und/oder Kühlanlage angebracht.

### HINTERGRUND DER ERFINDUNG

Vorrichtungen zum Steuern einer Heizungs- und/oder Kühlanlage können ein Steuersignal an die Heizungs- und/oder Kühlanlage senden, um die Heizungs- und/oder Kühlanlage zum Erwärmen oder Kühlen eines Raums zu steuern, insbesondere des Raums, in dem sich die Vorrichtung befindet. Zudem können Signale von der Heizungs- und/oder Kühlanlage empfangen werden.

Hierzu weist eine gattungsgemäße Vorrichtung zum Steuern einer Heizungs- und/oder Kühlanlage eine Kommunikationsschnittstelle zum Anschließen an eine Heizungs- und/oder Kühlanlage auf und elektronische Steuerungsmittel zum Ausgeben eines Steuerwerts über die Kommunikationsschnittstelle an die Heizungs- und/oder Kühlanlage und zum Verarbeiten von Eingangssignalen, die von der Heizungs- und/oder Kühlanlage an der Kommunikationsschnittstelle empfangen werden.

Bei einem gattungsgemäßen Verfahren zum Steuern einer Heizungs- und/oder Kühlanlage ist vorgesehen, dass ein Steuerwert von elektronischen Steuerungsmitteln einer Vorrichtung zum Steuern einer Heizungs- und/oder Kühlanlage erzeugt wird, dass der Steuerwert an eine Kommunikationsschnittstelle der Vorrichtung zum Steuern einer Heizungs- und/oder Kühlanlage geleitet wird, wobei an die Kommunikationsschnittstelle eine Heizungs- und/oder Kühlanlage zum Empfangen des Steuerwerts angeschlossen ist, und dass von der Heizungs- und/oder Kühlanlage ein Eingangssignal an die Kommunikationsschnittstelle gesendet wird.

Bekannte Vorrichtungen zum Steuern einer Heizungs- und/oder Kühlanlage sind für bestimmte zu steuernde Heizungs- und/oder Kühlanlagen ausgelegt. Anlagen verschiedener Hersteller erfordern in der Regel unterschiedliche Vorrichtungen zum Steuern dieser Anlagen. Nachteilig ist, dass zahlreiche verschiedene Vorrichtungen entwickelt und aktualisiert werden müssen, um unterschiedliche Heizungs- und/oder Kühlanlagen zu steuern.

### AUFGABE DER ERFINDUNG

Als eine Aufgabe der Erfindung kann erachtet werden, eine Vorrichtung und ein Verfahren zum Steuern einer Heizungs- und/oder Kühlanlage anzugeben, die in kostengünstiger Weise eine Steuerung verschiedenartiger Heizungs- und/oder Kühlanlagen ermöglichen.

### BESCHREIBUNG DER ERFINDUNG

Diese Aufgabe wird durch die Vorrichtung mit den Merkmalen des Anspruchs 1 und durch das Verfahren mit den Merkmalen des Anspruchs 13 gelöst. Vorteilhafte Varianten der Erfindung sind in den abhängigen Ansprüchen und in der folgenden Beschreibung gegeben.

Eine Vorrichtung der oben genannten Art ist erfindungsgemäß dadurch gekennzeichnet, dass zum Lesen von digitalen Eingangssignalen verschiedener Heizungs- und/oder Kühlanlagen die elektronischen Steuerungsmittel dazu eingerichtet sind, einen Schwellwert zum Unterscheiden zwischen einem hohen und einem niedrigen Pegel des digitalen Eingangssignals auswählbar festzulegen und das digitale Eingangssignal mit dem ausgewählten Schwellwert zu vergleichen.

Bei dem Verfahren der vorgenannten Art ist erfindungsgemäß vorgesehen, dass zum Lesen von digitalen Eingangssignalen verschiedener Heizungs- und/oder Kühlanlagen ein Schwellwert zum Unterscheiden zwischen einem hohen und einem niedrigen Pegel des digitalen Eingangssignals gemäß einer Auswahl festgelegt wird und das digitale Eingangssignal mit dem ausgewählten Schwellwert verglichen wird.

Als eine wesentliche Idee der Erfindung kann angesehen werden, ein Eingangssignal auswählbar in einer von verschiedenen Weisen auszuwerten. Dadurch können Werte von verschiedenen digitalen Eingangssignalen auch dann gelesen werden, wenn sich diese in ihren Pegelhöhen unterscheiden.

Vorteilhafterweise können hierdurch Eingangssignale verschiedener Heizungs- und/oder Kühlanlagen gelesen und verarbeitet werden. Es ist nicht mehr erforderlich, abhängig von einer vorhandenen Heizungs- und/oder Kühlanlage eine eigens auf diese abgestimmte Vorrichtung zum Steuern auszuwählen.

Allgemein kann unter einem Eingangssignal jede Spannung oder jeder Strom verstanden werden, der von außen an die Kommunikationsschnittstelle geführt wird. Abhängig von der Heizungs- und/oder Kühlanlage kann das Eingangssignal durch digitale Kodierung oder Modulation Informationen enthalten. Alternativ kann durch das Eingangssignal auch lediglich eine Spannung zur Energieversorgung der Vorrichtung bereitgestellt werden.

Ein weiterer Grundgedanke der Erfindung kann darin gesehen werden, eine gemeinsame Kommunikationsschnittstelle für alle Eingangssignale vorzusehen, unabhängig von einer Art der anzuschließenden Heizungs- und/oder Kühlanlage. Zwar könnte bereits mit vergleichsweise geringem Entwicklungsaufwand eine Kompatibilität zu verschiedenen Heizungs- und/oder Kühlanlagen erreicht werden, wenn die Vorrichtung für jede der Heizungs- und/oder Kühlanlagen jeweils eine Kommunikationsschnittstelle und geeignete elektronische Steuerungsmittel aufweist. Mit einer solchen Vervielfältigung von Komponenten gehen aber höhere Herstellungskosten einher. Zudem mag in diesem Fall der Installationsaufwand höher sein, wenn Anschlussklemmen abhängig von der vorhandenen Heizungs- und/oder Kühlanlage gewählt werden müssen. Hingegen ist bei der erfindungsgemäßen Lösung eine solche Vervielfältigung von Komponenten nicht vorgesehen. Es wird dieselbe Kommunikationsschnittstelle unabhängig vom zu verarbeitenden Eingangssignal genutzt. Zudem können nach dem Lesen des Eingangssignals eine weitere Verarbeitung und Auswertung mit denselben elektronischen Bauteilen erfolgen. Hierdurch sinken die Anzahl erforderlicher elektronischer Bauteile und die damit verbundenen Fertigungskosten.

Unter einem Analogsignal ist solch ein Signal zu verstehen, bei dem jede Signalhöhe einem bestimmten Wert zugeordnet ist. Insbesondere kann eine proportionale Zuordnung erfolgen.

Bei einem Digitalsignal sollen ausschließlich zwei verschiedene Signalhöhen oder - pegel identifiziert werden. Mit den elektronischen Steuerungsmitteln erfolgt daher zur Auswertung eines Eingangssignals als Digitalsignal ein Vergleich mit einem Schwellwert. Abhängig vom Unter- oder Überschreiten des Schwellwerts wird ein niedriger oder ein hoher Signalpegel des Eingangssignals angenommen. Üblicherweise ist das Eingangssignal eine elektrische Spannung.

Um verschiedene Digitalsignale lesen zu können, kann bei der Erfindung der Schwellwert auswählbar festgelegt werden. Der ausgewählte Schwellwert wird beispielsweise als Spannungshöhe einer Komparatorschaltung zugeführt. So ist auch hier keine Vervielfältigung von Komponenten erforderlich. Vielmehr kann dieselbe Komparatorschaltung für verschiedene Digitalsignale genutzt werden, die sich in ihren Signalpegeln unterscheiden und folglich verschiedene Schwellwerte erfordern.

Bei einer besonders bevorzugten Ausgestaltung der erfindungsgemäßen Vorrichtung können nicht nur die Eingangssignale in verschiedener Weise ausgewertet werden. Vielmehr kann auch die Art der auszugebenden Steuerwerte ausgewählt werden, so dass diese von einer vorhandenen Heizungs- und/oder Kühlanlage korrekt gelesen und umgesetzt werden können. So sind bei dieser Ausführung die elektronischen Steuerungsmittel eingerichtet zum auswählbaren Ausgeben eines Steuerwerts in einer Form aus einer oder mehrerer der folgenden Formen:
- als analoge Ausgangsspannung, deren Höhe abhängig von, insbesondere proportional zu, dem Steuerwert gewählt wird,
- als digitales Spannungssignal, wobei der Steuerwert durch eine Folge von hohen und niedrigen Spannungspegeln kodiert ist,
- als digitales Stromsignal, wobei der Steuerwert durch eine Folge von hohen und niedrigen Strompegeln kodiert ist.

Bei dem Steuerwert kann es sich beispielsweise um einen Temperatursteuerwert handeln, gemäß dem die Heizungs- und/oder Kühlanlage eine Heiz- oder Kühlleistung einstellt. Zudem kann der Steuerwert eine Statusabfrage sein, beispielsweise nach einer Kessel- oder Rücklauftemperatur, die von der Heizungs- und/oder Kühlanlage erfasst und an die erfindungsgemäße Vorrichtung auf die Statusabfragen hin gesendet werden kann.

Bevorzugt können die elektronischen Steuerungsmittel aus allen drei der oben genannten Formen wählen. Für die verschiedenen Formen des auszugebenden Steuerwerts wird dieselbe Kommunikationsschnittstelle genutzt.

Bei einer analogen wie auch bei einer digitalen Ausgangsspannung wird ein maximaler Signalpegel durch die Spannungshöhe der Eingangssignale vorgegeben. Beispielsweise kann der maximale Signalpegel einem bestimmten prozentualen Anteil der Spannungshöhe der Eingangssignale entsprechen. Dadurch ist keine variable Auswahl der Höhe eines maximalen Signalpegels erforderlich.

Indem bei einer digitalen Ausgangsspannung für den niedrigen Pegel die Spannung genügend reduziert wird, kann auch für diesen Pegel eine Anpassbarkeit entfallen. Damit können noch immer Heizungs- und/oder Kühlanlage angesteuert werden, die verschiedene Schwellwerte zwischen hohem und niedrigem Spannungspegel nutzen, ohne dass kostenaufwändige Ausführungen erforderlich wären.

Bevorzugt sind die elektronischen Steuerungsmittel weiterhin dazu eingerichtet, bei einer Ausgabe des Steuerwerts als digitales Stromsignal den hohen und/oder niedrigen Strompegel auswählbar festzulegen. Der niedrige Strompegel kann beispielsweise durch den Strombedarf der Komponenten der Vorrichtung in einem Normalbetrieb gegeben sein und etwa 30mA betragen. Für einen hohen Strompegel wird ein zusätzliches Stromsignal angefordert. Dessen Höhe kann aus verschiedenen Einstellungen ausgewählt werden, beispielsweise aus 20mA, 40mA, 50mA und/oder 60mA. Der hohe Pegel ist dann die Summe aus dem vorgenannten Strombedarf von beispielsweise 30mA und dem ausgewählten zusätzlichen Stromsignal. Ist der hohe Strompegel ungemäß hoch, wird dies von manchen Heizungs- und/oder Kühlanlagen als fehlerhafter Wert behandelt. Dies kann vorteilhafterweise vermieden werden, indem zumindest die Höhe des hohen Strompegels variabel einstellbar ist.

Die Kommunikationsschnittstelle kann zweckmäßigerweise Anschlussklemmen zum Anschließen von Drähten oder Adern der Heizungs- und/oder Kühlanlage aufweisen. Bevorzugt werden zum Empfangen von verschiedenen digitalen Eingangssignalen, die sich in der Höhe ihrer hohen und/oder niedrigen Signalpegel unterscheiden, und zum Weiterleiten dieser Eingangssignale zu den elektronischen Steuerungsmitteln dieselben Anschlussklemmen genutzt. Hierbei können insbesondere genau zwei Anschlussklemmen für das Herstellen einer Verbindung zur Übertragung digitaler Eingangssignale vorgesehen sein. Diese Anschlussklemmen werden auch zum Ausgeben des Steuerwerts als digitales Strom- oder Spannungssignal verwendet. Wird ein Steuerwert als analoge Ausgangsspannung ausgegeben, werden vorzugsweise die beiden genannten Anschlussklemmen und eine weitere Anschlussklemme verwendet.

Zweckmäßigerweise können elektronische Energieverteilungsmittel vorgesehen und dazu eingerichtet sein, eine Stromversorgung von elektronischen Komponenten der Vorrichtung durch ein Eingangssignal, das an der Kommunikationsschnittstelle empfangen wird, bereitzustellen. Die elektronischen Energieverteilungsmittel weisen bevorzugt eine Strombegrenzungsschaltung auf, die zum Vermeiden eines Spannungszusammenbruchs des Eingangssignals eine Stromversorgung durch das Eingangssignal auf einen vorgegebenen Maximalwert begrenzen.

Bei herkömmlichen Vorrichtungen zum Steuern einer Heizungs- und/oder Kühlanlage sind ist der Energiebedarf gerade so bemessen, dass eine Energieversorgung über die Eingangssignale der zugehörigen Heizungs- und/oder Kühlanlage genügt. Der Energiebedarf der erfindungsgemäßen Vorrichtung kann hingegen unter Umständen die maximal mögliche Energieversorgung über die Eingangssignale mancher Heizungs- und/oder Kühlanlagen übersteigen. Damit in einem solchen Fall eine Beeinträchtigung der Heizungs- und/oder Kühlanlage vermieden werden kann, wird ein Maximalwert für die Stromversorgung vorgegeben. Dieser ist geringer gewählt als ein maximal möglicher Strombedarf aller Komponenten der Vorrichtung. Der Strombedarf der Vorrichtung kann zeitlich stark variieren, insbesondere durch den Betrieb eines weiterhin vorgesehenen Funkmittels und das Aufladen eines zusätzlich vorgesehenen Energiespeichers, welche später beschrieben werden. Um einen Spannungszusammenbruch der Versorgungsspannung der Heiz- und/oder Kühlanlage sicher auszuschließen, sorgt die Strombegrenzungsschaltung deshalb dafür, dass bei gleichzeitigem Energiebedarf aller Komponenten der erfindungsgemäßen Vorrichtung der Energieverbrauch unterhalb des Maximalwerts der Strombegrenzungsschaltung bleibt, insbesondere indem ein Ladestrom zum Energiespeicher und/oder eine Energieversorgung der Funkmittel reduziert oder abgeschaltet wird.

Bei einem Einschalten der erfindungsgemäßen Vorrichtung kann es vorkommen, dass zahlreiche Komponenten einen hohen Energiebedarf zeigen. Insbesondere kann ein vom Energiespeicher geforderter Ladestrom besonders hoch sein. Für den Betrieb ist ein sofortiges Laden des Energiespeichers jedoch von geringerer Bedeutung als die Funktionstüchtigkeit der übrigen Komponenten. Daher ist bevorzugt zwischen der Strombegrenzungsschaltung und dem Energiespeicher eine Sicherheitsschaltung vorgesehen, welche dazu eingerichtet ist, eine zum Laden des Energiespeichers genutzte Leistung auf einen Maximalwert zu begrenzen, der niedriger ist als die über die Strombegrenzungsschaltung der Energieverteilungsmittel bereitgestellte maximale Leistung.

Indem zusätzlich zu der Strombegrenzungsschaltung der Energieverteilungsmittel die Sicherheitsschaltung am Energiespeicher eingesetzt wird, kann zudem für den vergleichsweise häufigen Fall, dass der Energiespeicher einen sehr großen Ladestrom fordert, die Sicherheit vor einem Spannungszusammenbruch des Eingangssignals erhöht werden.

Der Energiespeicher kann prinzipiell in beliebiger nicht flüchtiger Weise Energie speichern. Beispielsweise kann er durch eine Batterie, also einen elektrochemischen Speicher, oder durch einen elektrischen Speicher gebildet sein. Bevorzugt umfasst der Energiespeicher einen Doppelschichtkondensator. Dieser kann vergleichsweise schnell eine hohe Leistung bereitstellen und zeigt auch bei vielen Ladezyklen nur geringe Alterungserscheinungen.

Eine Spannungshöhe, die vom Energiespeicher bereitgestellt wird, kann von dessen Ladezustand abhängen. Daher soll der Energiespeicher nicht zur Energieversorgung genutzt werden, wenn seine bereitgestellte Spannung zu gering ist. Aus diesem Grund ist die Sicherheitsschaltung vorzugsweise dazu eingerichtet, eine Energieversorgung von den elektronischen Komponenten durch den Energiespeicher nur dann zu ermöglichen, wenn eine von dem Energiespeicher bereitgestellte Spannung größer oder gleich einer vorgebbaren Grenzspannung ist. Dabei ist die Grenzspannung bevorzugt größer oder gleich einer Betriebsspannung von elektronischen Komponenten der Vorrichtung. Dies kann auch als Undervoltage-Lockout bezeichnet werden.

Die elektronischen Komponenten können unter anderem einen Mikrocontroller, einen Temperatursensor und Funkmittel umfassen. Der Mikrocontroller kann das Steuersignal abhängig von einer Ist-Temperatur erzeugen, die vom Temperatursensor bestimmt wird. Zudem kann der Mikrocontroller das Steuersignal abhängig von einer Information, beispielsweise einer Soll-Temperatur, festlegen, die über die Funkmittel empfangen wird.

In Zeitintervallen, in denen die Funkmittel aktiv sind, ist der Leistungsbedarf der Vorrichtung deutlich erhöht. Dabei kann der Leistungsbedarf die Leistung übersteigen, die maximal dem Eingangssignal entnommen werden kann. In diesen Fällen kann vorteilhafterweise eine Energieversorgung der Funkmittel über den Energiespeicher erfolgen.

Ein Anschluss der erfindungsgemäßen Vorrichtung mit beliebigen Heizungs- und/oder Kühlanlagen soll in möglichst einfacher Weise erfolgen. Bevorzugt sollten zwei Drähte oder Adern der Heizungs- und/oder Kühlanlagen, mit denen ein Eingangssignal an die Vorrichtung übertragen wird, auch vertauscht an die Anschlussklemmen der Kommunikationsschnittstelle angeschlossen werden können. Dies kann erreicht werden, indem die Energieverteilungsschaltung als Verpolungsschutz einen Gleichrichter aufweist zum Gleichrichten einer Eingangsspannung an der Kommunikationsschnittstelle, das heißt der Spannung des Eingangssignals.

Die digitalen Eingangssignale von manchen Heizungs- und/oder Kühlanlagen unterscheiden sich darin, dass eine Zuordnung des hohen und des niedrigen Signalpegels zueinander vertauscht ist. Das heißt, eine bestimmte Information wird bei einem dieser Eingangssignale durch einen niedrigen Signalpegel dargestellt und bei dem anderen dieser Eingangssignale durch einen hohen Signalpegel. Zum Verarbeiten dieser verschiedenen digitalen Eingangssignale sind die elektronischen Steuerungsmittel bevorzugt dazu eingerichtet, nach einem Vergleich des Eingangssignals mit dem Schwellwert das resultierende Signal zu invertieren und zur weiteren Signalverarbeitung das resultierende Signal sowohl invertiert als auch nicht invertiert weiterzugeben. Die Weitergabe kann beispielsweise an zwei Eingänge eines Mikrocontrollers erfolgen. Zwar kann prinzipiell ein Mikrocontroller auch durch Software eine solche Invertierung durchführen. Bei einer Invertierung durch speziell hierzu gestaltete Hardware können aber geringere Herstellungskosten und eine kürzere Verarbeitungszeit erreicht werden.

Eine Auswahl der Höhe des vorgenannten Schwellwerts kann prinzipiell manuell oder automatisch erfolgen. Insbesondere kann über die Funkmittel der Vorrichtung eine Anweisung empfangen werden, welcher Schwellwert auszuwählen ist. Diese Anweisung kann beispielsweise von Servicepersonal manuell bestimmt und über das Internet an einen Funktransmitter gesendet werden, welcher die Anweisung weiter an die Funkmittel sendet. Es kann auch eine automatische Auswahl über einen Server oder allgemein eine Recheneinrichtung erfolgen, die sodann die Anweisung über das Internet sendet. Alternativ können die elektronischen Steuerungsmittel dazu eingerichtet sein, basierend auf einer Analyse des Eingangssignals automatisch eine Auswahl des Schwellwerts vorzunehmen. Eine solche Analyse kann beispielsweise umfassen, dass Eingangssignale in verschiedenen der auswählbaren Formen gelesen und ausgewertet werden und dass anschließend eine Plausibilitätsprüfung von den Steuerungsmitteln durchgeführt wird, um zu überprüfen, ob der gelesene Wert korrekt ausgewertet wurde. Die Plausibilitätsprüfung kann eine Überprüfung umfassen, ob ein gelesener Wert innerhalb eines vorgegebenen Wertebereichs liegt.

Die Analyse kann auch eine Spannungsmessung an mehreren Zeitpunkten umfassen. Abhängig von den Variationen in der Spannungshöhe können die beiden Pegel eines digitalen Signals erkannt werden.

Auch eine automatische Auswahl, ob ein digitales Spannungssignal oder ein digitales Stromsignal auszugeben ist, kann abhängig von dem Eingangssignal erfolgen. So kann erkannt werden, dass an den beiden genutzten Anschlussklemmen als Normalfall der hohe der beiden Spannungspegel des digitalen Eingangssignals anliegt und auf den niedrigen Spannungspegel nur beim Übertragen von Informationen gewechselt wird. In diesem Fall kann ein Steuerbefehl als digitales Spannungssignal automatisch ausgewählt werden. Liegt hingegen an den Anschlussklemmen als Normalfall der niedrige Spannungspegel an und es wird nur zur Informationsübertragung auf den hohen Pegel gewechselt, so kann für den Steuerbefehl ein digitales Stromsignal gewählt werden.

Vorteilhafte Varianten des erfindungsgemäßen Verfahrens ergeben sich durch Verwendung der verschiedenen Ausführungen der erfindungsgemäßen Vorrichtung.

Weitere Eigenschaften und Vorteile werden im Zusammenhang mit den beigefügten Figuren beschrieben.

### KURZBESCHREIBUNG DER FIGUREN

- Figur 1: zeigt eine schematische Übersichtsdarstellung eines Ausführungsbeispiels einer erfindungsgemäßen Vorrichtung zum Steuern einer Heizungs- und/oder Kühlanlage.
- Figur 2: zeigt einen Ausschnitt eines Schaltungsplans für die Vorrichtung aus Fig. 1 zum Steuern einer Heizungs- und/oder Kühlanlage.

### DETAILLIERTE BESCHREIBUNG DER FIGUREN

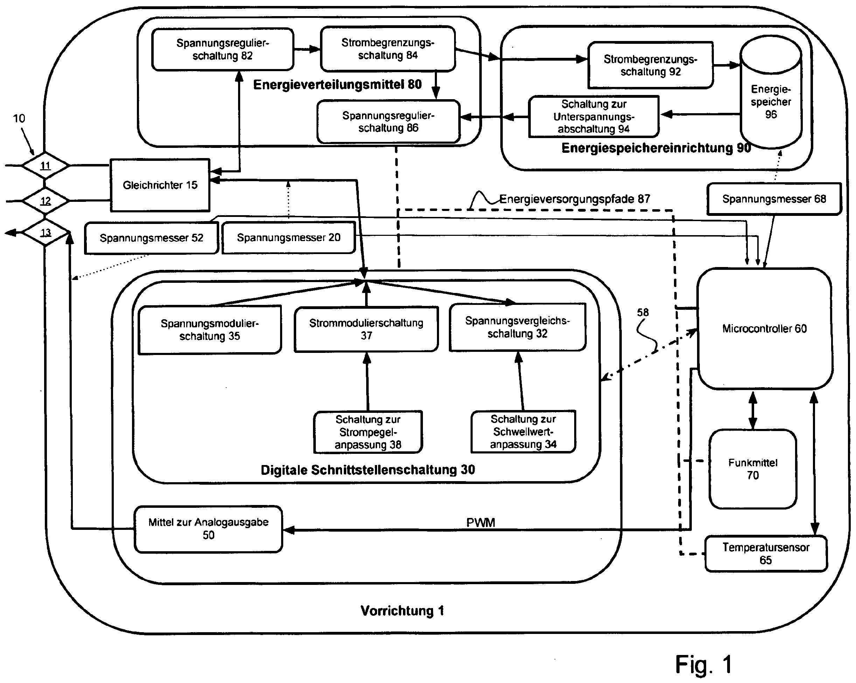

Figur 1 zeigt eine schematische Übersichtsdarstellung eines Ausführungsbeispiels einer erfindungsgemäßen Vorrichtung 1 zum Steuern einer nicht dargestellten Heizungs- und/oder Kühlanlage.

Als wesentliche Komponenten weist die Vorrichtung 1 eine Kommunikationsschnittstelle 10, elektronische Steuerungsmittel zum Lesen und Verarbeiten eines Eingangssignals an der Kommunikationsschnittstelle 10 sowie zum Erzeugen und Ausgeben eines Steuerwerts über die Kommunikationsschnittstelle 10, Energieverteilungsmittel 80 und eine Energiespeichereinrichtung 90 auf.

Die elektronischen Steuerungsmittel umfassen insbesondere die folgenden Komponenten:
- eine digitale Schnittstellenschaltung 30 zum Lesen eines Eingangssignals als digitales Spannungssignal und zum Ausgeben eines Steuerwerts als digitales Strom- oder Spannungssignal,
- einen Spannungsmesser 20 zum Kontrollieren eines Eingangssignals,
- Mittel 50 zum Ausgeben eines Steuerwerts als analoges Spannungssignal und
- einen Mikrocontroller 60 zum Verarbeiten des gelesenen Eingangssignals und zum Erzeugen eines Steuerwerts.

Indem ein Eingangssignal in verschiedenen auswählbaren Weisen verarbeitet werden kann, können vorteilhafterweise unterschiedliche Heizungs- und/oder Kühlanlagen mit der erfindungsgemäßen Vorrichtung 1 gesteuert werden.

Eine wesentliche Idee kann darin gesehen werden, dass für verschiedenartige Eingangssignale dieselbe Kommunikationsschnittstelle 10, das heißt dieselben Anschlussklemmen, genutzt werden. Hierdurch sinken die Herstellungskosten und die Anforderungen an Servicepersonal zum Anschließen der Vorrichtung 1. Die Kommunikationsschnittstelle 10 weist mehrere, im vorliegenden Beispiel drei, Anschlussklemmen 11 bis 13 auf. An diese werden Drähte oder Adern der Heizungs- und/oder Kühlanlage angeschlossen. Weist die Anlage einen digitalen Bus auf, stellt sie in der Regel zwei Drähte bereit. Diese werden an die beiden Anschlussklemmen 11, 12 verbunden, wobei die dritte Anschlussklemme 13 ungenutzt bleibt. Heizungs- und/oder Kühlanlagen auf analoger Signalbasis erfordern hingegen meist drei Drähte. Diese werden mit den drei Anschlussklemmen 11 bis 13 verbunden.

Unter Eingangssignalen können alle elektrischen Spannungen und/oder Ströme verstanden werden, die von einer Heizungs- und/oder Kühlanlage ausgehend über die Drähte, die an den Anschlussklemmen 11, 12 befestigt sind, geführt werden.

Die Vorrichtung 1 weist elektrische Leitungen auf, die ein Eingangssignal von den Anschlussklemmen 11, 12 zu einem Gleichrichter 15 führen. Bei dem Eingangssignal handelt es sich nicht um eine Wechselspannung, die hiermit gleichgerichtet werden sollte. Vielmehr wird durch den Gleichrichter 15 ein Verpolungsschutz erreicht. So hängt eine vom Gleichrichter 15 ausgegebene Spannung allein vom Betrag der Spannungsdifferenz an den beiden Anschlussklemmen 11, 12 ab. Die ausgegebene Spannung hängt hingegen nicht davon ab, ob die beiden Drähte, die an die Anschlussklemmen 11, 12 verbunden werden, miteinander vertauscht werden. Dadurch wird der Installationsaufwand verringert und eine mögliche Fehlerquelle bei der Installation ausgeschlossen.

Die vom Gleichrichter 15 ausgegebene Spannung wird zum einen den Energieverteilungsmitteln 80 zugeführt. Zum anderen wird die ausgegebene Spannung von einem Spannungsmesser 20 erfasst und auch an die digitale Schnittstellenschaltung 30 geführt.

Der Spannungsmesser 20 bestimmt einen Spannungswert dieser Spannung und gibt diesen an einen Eingang des Mikrocontrollers 60 aus. Dadurch kann insbesondere ein Rückschluss auf den auszuwählenden Schwellwert erfolgen. Zudem kann kontrolliert werden, ob ein an den Anschlussklemmen 11, 12 ausgegebenes Ausgangssignal gewünschte Pegelhöhen annimmt.

In der digitalen Schnittstellenschaltung 30 wird die Spannung, die vom Gleichrichter 15 ausgegeben wird, als digitales Spannungssignal gelesen, welches entweder einen niedrigen oder hohen Spannungspegel hat. Hierzu wird die Spannung mittels einer Spannungsvergleichsschaltung 32 mit einem Schwellwert verglichen. Unterschreitet die Spannung den Schwellwert, wird ein niedriger Spannungspegel angenommen, ansonsten ein hoher Spannungspegel. Der Schwellwert muss daher zwischen dem hohen und dem niedrigen Spannungspegel liegen.

Eine Kernidee beruht darin, dass verschiedene Eingangssignale, die unterschiedliche hohe und/oder niedrige Spannungspegel aufweisen, effizient und kostengünstig gelesen werden können, indem der Schwellwert variabel einstellbar ist.

Hierzu ist eine Schaltung zur Schwellwertanpassung 34 vorhanden. Mit dieser kann ein Schwellwert aus mehreren Schwellwerten ausgewählt werden, welcher von der Spannungsvergleichsschaltung 32 daraufhin genutzt wird.

Vorteilhafterweise kann somit eine einzige Spannungsvergleichsschaltung 32 für verschiedenartige digitale Eingangsspannungen genutzt werden.

Es werden also für verschiedene digitale Bussysteme unterschiedlicher Heizungs- und/oder Kühlanlagen dieselben Anschlussklemmen 11, 12 und dieselbe Spannungsvergleichsschaltung 32 verwendet. Im Vergleich zu einer theoretischen Realisierung, bei der für verschiedene Bussysteme von Heizungs- und/oder Kühlanlagen jeweils eigene Anschlussklemmen und jeweils eine Spannungsvergleichsschaltung vorgesehen ist, können durch die erfindungsgemäße Vorrichtung 1 die Herstellungskosten deutlich gesenkt werden.

Eine Auswahl eines Schwellwerts über die Schaltung zur Schwellwertanpassung 34 kann entweder manuell erfolgen oder auch automatisch. Für eine automatische Auswahl kann beispielsweise in einem Erkennungsmodus eine Spannungsmessung über den Spannungsmesser 20 erfolgen. Spannungswerte, die häufig gemessen werden, werden als niedriger und hoher Spannungspegel angenommen und folglich kann ein Schwellwert zwischen diesen Spannungspegeln ausgewählt werden.

Von der Spannungsvergleichsschaltung 32 wird das gelesene Eingangssignal als digitales Signal an einen Eingang des Mikrocontrollers 60 gegeben.

Der Mikrocontroller 60 kann, insbesondere auf Grundlage des gelesenen Eingangssignals, einen Steuerwert erzeugen. Das Eingangssignal kann beispielsweise eine Temperatur der Heizungs- und/oder Kühlanlage angeben. Als Steuerwert kann sodann ein Befehl zum Erhöhen oder Erniedrigen der Temperatur der Heizungs- und/oder Kühlanlage erzeugt werden. Zudem soll unter einem Steuerwert auch eine Statusabfrage verstanden werden, mit welcher die Vorrichtung 1 die Heizungs- und/oder Kühlanlage auffordert, eine Statusinformation, insbesondere eine momentane Temperatur, als Eingangssignal zu übermitteln.

Der Mikrocontroller 60 kann prinzipiell durch eine beliebige Recheneinrichtung gebildet sein. Den Steuerwert kann der Mikrocontroller 60 abhängig von einer Umgebungstemperatur erzeugen. Diese kann mit einem Temperatursensor 65 erfasst werden, welcher vom Mikrocontroller 60 ansteuerbar ist und an diesen einen gemessenen Temperaturwert sendet.

Zudem kann ein Steuerwert vom Mikrocontroller 60 abhängig von einer Anweisung erzeugt werden, die über Funk empfangen wird. Hierzu sind Funkmittel 70 vorhanden. Diese können dazu eingerichtet sein, mit einem Funktransmitter zu kommunizieren, welcher eine Internetverbindung eingehen kann. Dadurch ist eine Kommunikationsverbindung mit den Funkmitteln 70 weitestgehend ortsunabhängig und mit beliebigen internetfähigen Geräten möglich.

Es ist auswählbar, in welcher Form der Mikrocontroller 60 den Steuerwert ausgibt. Hierbei kann der Steuerwert als analoge Ausgangsspannung, als digitale Ausgangsspannung oder als digitaler Ausgangsstrom vorliegen. Der Ausgangsstrom kann auch als Stromsignal bezeichnet werden, welcher von der Heizungs- und/oder Kühlanlage angefordert wird. Entsprechend kann die Ausgangsspannung auch als Spannungssignal verstanden werden. Diese Auswahl kann manuell, insbesondere über die Funkmittel 70, erfolgen. Alternativ oder ergänzend kann der Mikrocontroller 60 dazu gestaltet sein, eine solche Auswahl automatisch zu treffen. Dies kann beispielsweise auf Grundlage eines Spannungsmessung des Eingangssignals erfolgen oder auch in einem Trial-and-Error-Verfahren, in welchem eine Reaktion der Heizungs- und/oder Kühlanlage auf die verschiedenen ausgebbaren Signalformen gemessen wird.

Für eine Ausgabe des Steuerwerts als analoge Ausgangsspannung gibt der Mikrocontroller 60 einen Steuerwert, beispielsweise entsprechend einer Pulsweitenmodulation (PWM), an Mittel zur Analogausgabe 50 aus. Die Mittel zur Analogausgabe 50 geben den Steuerwert schließlich als analoge Ausgangsspannung an die Kommunikationsschnittstelle 10 weiter, insbesondere zu der dritten Anschlussklemme 13.

Die angeschlossene Heizungs- und/oder Kühlanlage kann die Höhe der analogen Ausgangsspannung an der Anschlussklemme 13 unerwünscht beeinflussen. Um diese Beeinflussung zu kompensieren, wird mit einem Spannungsmesser 52 und dem Mikrocontroller 60 eine Regelschleife gebildet. Dazu wird die an der Anschlussklemme 13 erzeugte analoge Ausgangsspannung mit dem Spannungsmesser 52 kontrolliert. Die gemessene Spannungshöhe wird an den Mikrocontroller 60 gesendet. Dieser ermittelt eine Differenz zwischen der gemessenen Spannungshöhe und der gewünschten Spannungshöhe. Entsprechend der ermittelten Differenz erhöht oder erniedrigt der Mikrocontroller den an die Mittel zur Analogausgabe 50 ausgegebenen Wert.

Anstelle der analogen Ausgabe kann auch ausgewählt sein, dass der Mikrocontroller 60 über eine Verbindungsleitung 58 Steuerwerte als digitale Signale an die digitale Schnittstellenschaltung 30 ausgibt. Wie beschrieben, kann wahlweise eine digitale Ausgangsspannung oder ein digitaler Ausgangsstrom erzeugt werden. Dazu umfasst die digitale Schnittstellenschaltung 30 sowohl eine Spannungsmodulierschaltung 35 als auch eine Strommodulierschaltung 37. Ein von diesen Schaltungen 35 oder 37 erzeugtes Signal wird über den Gleichrichter 15 an die Leitungen an den Anschlussklemmen 11, 12 ausgegeben.

Durch eine Schaltung zur Strompegelanpassung 38 kann die Größe eines hohen Strompegels des digitalen Stromsignals ausgewählt werden. Dadurch kann sichergestellt werden, dass die Heizungs- und/oder Kühlanlage den Strompegel korrekt interpretiert.

Eine Pegelanpassung der digitalen Spannungssignale kann zwar ebenfalls erfolgen, ist in der Regel aber nicht erforderlich. So kann der hohe Pegel durch die Spannungshöhe des Eingangssignals bestimmt sein. Wird der niedrige Pegel ausreichend klein gewählt, so kann die Heizungs- und/oder Kühlanlage hohe und niedrige Pegel weitestgehend unabhängig von der konkreten Schwellwerthöhe, die sie zum Unterscheiden hoher und niedriger Pegel nutzt, sicher erkennen.

Im Folgenden wird die Energieversorgung der Komponenten der erfindungsgemäßen Vorrichtung 1 beschrieben. Hierzu sind Energieverteilungsmittel 80 und eine Energiespeichereinrichtung 90 vorhanden.

Die vom Gleichrichter 15 ausgegebene Spannung wird einer Spannungsregulierschaltung 82 der Energieverteilungsmittel 80 zugeführt. Diese Schaltung 82 reguliert die Spannung auf einen gewünschten Wert und gibt sie an eine Strombegrenzungsschaltung 84 weiter. Auf diese folgt eine weitere Spannungsregulierschaltung 86, von wo schließlich über Energieversorgungspfade 87 die übrigen Komponenten mit Energie versorgt werden, insbesondere die digitale Schnittstellenschaltung 30, der Mikrocontroller 60, der Temperatursensor 65 und die Funkmittel 70. Die Mittel 50 zur Analogausgabe werden bevorzugt nicht über die Energieverteilungsmittel 80 mit Energie versorgt. Stattdessen kann eine direkte Energieversorgung über die Leitungen an den Anschlussklemmen 11 und 12 erfolgen. Um störende Beeinflussungen zu vermeiden, können die Mittel 50 zur Analogausgabe allein über einen Transistor mit den übrigen Komponenten, zweckmäßigerweise mit dem Mikrocontroller 60, verbunden sein.

Ab einer bestimmten entnommenen Leistung droht ein Zusammenbruch der Spannung des Eingangssignals. Dies kann durch die Strombegrenzungsschaltung 84 vermieden werden, indem diese das Überschreiten eines Stromgrenzwerts verhindert und damit eine maximale Leistung oder Energie bestimmt, die den übrigen Komponenten zur Verfügung gestellt wird.

Herkömmliche Vorrichtungen zum Steuern einer Heizungs- und/oder Kühlanlage, die keine Funkmittel und auch keine digitale Schnittstellenschaltung mit variabler Pegelanpassung aufweisen, haben einen vergleichsweise geringen Energiebedarf. Erst durch die verschiedenen Komponenten der erfindungsgemäßen Vorrichtung 1 kommen die Sicherheitsvorteile durch eine Begrenzung der maximal genutzten Leistung zum Tragen.

Wenn beispielsweise die Funkmittel 70 einen erhöhten Energiebedarf zeigen, der den Maximalwert der Strombegrenzungsschaltung 84 übersteigt, so verhindert diese einen Spannungszusammenbruch des Eingangssignals durch Reduzieren der Energieversorgung der Funkmittel 70. Damit möglichst dennoch eine ausreichende Energieversorgung der Funkmittel 70 ermöglicht wird, wird die Energiespeichereinrichtung 90 genutzt. Elektronische Steuerungsmittel können insbesondere dazu eingerichtet sein, der Energiespeichereinrichtung 90 genau dann Energie zu entnehmen, wenn eine von den übrigen Komponenten geforderte Leistung die Maximalleistung übersteigt, die durch die Strombegrenzungsschaltung 84 vorgegeben wird.

Die Energiespeichereinrichtung 90 weist einen Energiespeicher 96 auf, der bevorzugt ein Doppelschichtkondensator ist, das heißt ein Super- oder Ultrakondensator. Dieser wird über das Eingangssignal geladen. Dazu ist die Strombegrenzungsschaltung 84 der Energieverteilungsmittel 80 an eine weitere Strombegrenzungsschaltung 92 der Energiespeichereinrichtung 90 angeschlossen. Die Strombegrenzungsschaltung 92 verhindert, dass die maximale Leistung, die durch die Strombegrenzungsschaltung 84 erlaubt wird, vollständig zum Laden des Energiespeichers 96 genutzt wird. Dazu ist ein Stromgrenzwert der Strombegrenzungsschaltung 92 niedriger als ein Stromgrenzwert der Strombegrenzungsschaltung 84. Somit beeinträchtigt ein Laden des Energiespeichers 96 nicht den Betrieb der übrigen Komponenten.

Ein Ladezustand des Energiespeichers 96 kann über dessen ausgegebene Spannung überwacht werden. Hierzu ist ein Spannungsmesser 68 vorhanden, der den gemessenen Spannungswert an den Mikrocontroller 60 sendet.

Ist der Energiespeicher 96 nur geringfügig geladen, ist eine von ihm ausgegebene Spannung möglicherweise nicht ausreichend hoch. Daher ist eine Undervoltage-Lockout-Schaltung 94 vorhanden, also eine Schaltung zur Unterspannungsabschaltung 94. Diese isoliert eine vom Energiespeicher 96 ausgegebene Spannung, solange diese Spannung einen vorgegebenen Grenzwert unterschreitet. Erst mit Erreichen des Grenzwerts wird eine Verbindung zu der Spannungsregulierschaltung 86 hergestellt, so dass der Energiespeicher 96 zur Energieversorgung genutzt werden kann.

Die Undervoltage-Lockout-Schaltung 94 und/oder die Strombegrenzungsschaltung 92 können auch als Sicherheitsschaltung bezeichnet werden.

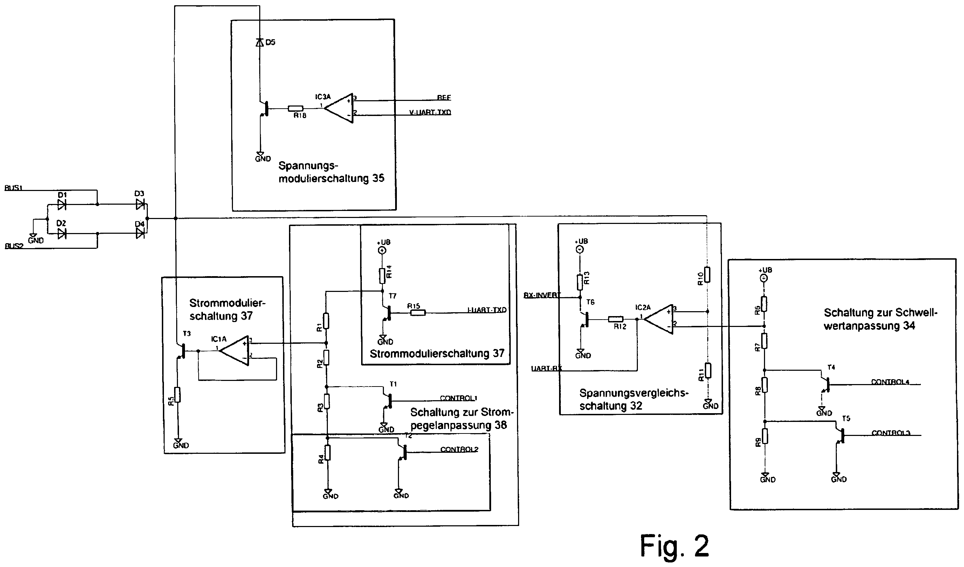

Ein Ausschnitt eines Schaltungsplans der Vorrichtung 1 aus Fig. 1 ist in Fig. 2 dargestellt. Diese zeigt die wesentlichen Komponenten für den Empfang und das Senden von digitalen Signalen. Die Komponenten zur analogen Signalverarbeitung sind nicht abgebildet.

Mit GND ist durchgängig eine elektrische Verbindung zu Masse angegeben, welche vom elektrischen Potential am negativen Anschluss, das heißt an der Anschlussklemme 12, abhängen kann. Widerstände sind mit R und einer fortlaufenden Nummer gekennzeichnet. Entsprechend sind Transistoren und Dioden durch T beziehungsweise D und eine fortlaufende Nummer angegeben. Operationsverstärker sind durch IC, eine fortlaufende Nummer und ein A gekennzeichnet. Mit UB wird die Betriebsspannung bezeichnet, die aus der Eingangsspannung gewonnen werden kann.

Die beiden Leitungen an den Anschlussklemmen 11, 12 sind hier als BUS1, BUS2 bezeichnet. Die dritte Anschlussklemme dient der Übertragung analoger Signale und ist daher hier nicht abgebildet.

Der Gleichrichter 15 ist als ein Brückengleichrichter mit vier Dioden D1 bis D4 ausgeführt. Der Ausgang des Gleichrichters führt zu einem Abzweigungspunkt. Mit diesem sind zum Senden von Steuerbefehlen die Spannungsmodulierschaltung 35 und die Strommodulierschaltung 37 verbunden. Zum Kontrollieren von Eingangssignalen ist mit dem Abzweigungspunkt die Spannungsvergleichsschaltung 32 verbunden.

Die Spannungsmodulierschaltung 35 gibt eine Ausgangsspannung mit hohem oder niedrigem Pegel abhängig von den Signalen an den Eingängen des Operationsverstärkers IC3A aus. Dazu wird ein Eingang mit einem Signal V-UART-TXD des Mikrocontrollers entsprechend dem zu sendenden Steuerwert versorgt. An den anderen Eingang des Operationsverstärkers wird eine Referenzspannung REF gelegt, welche aus der Spannung generiert sein kann, mit welcher der Mikrocontroller 60 von den Energieverteilungsmitteln versorgt wird. Bevorzugt wird diese Spannung genutzt, weil sie zeitlich stabil ist. Damit kann ein Schwellwert für das Signal des Mikrocontrollers bereitgestellt werden.

Die Strommodulierschaltung 37 ist in Fig. 2 durch zwei räumlich separate Abschnitte dargestellt. Gemäß einem Steuersignal I-UART-TXD vom Mikrocontroller wird ein hoher oder niedriger Signalpegel erzeugt.

Die Höhe dieser Pegel kann über die Schaltung zur Strompegelanpassung 38 auswählbar eingestellt werden. Diese weist im dargestellten Fall eine erste Stufe mit R3 und T1 und eine zweite Stufe mit R4 und T2 auf. Über die Signale "Control1" und "Control2" an der jeweiligen Basis von T1 und T2 können die Signalhöhen eingestellt werden, die dem Operationsverstärker IC1A zugeführt werden. Eine beliebige Anzahl weiterer Pegel kann auswählbar sein, wenn zwischen R4 und GND eine entsprechende Anzahl weiterer Widerstände mit jeweils einem Transistor vorgesehen ist. Diese würden entsprechend den Paaren R3, T1 und R4, T2 angeordnet.

Zum Lesen von digitalen Eingangssignalen dient die Spannungsvergleichsschaltung 32. Diese vergleicht das Eingangssignal, das am positiven Eingang von IC2A anliegt, mit einem Schwellwert am negativen Eingang. Abhängig vom Vergleich wird ein hoher oder niedriger Wert ausgegeben. Dieser Wert wird über eine Leitung, die mit UART-RX gekennzeichnet ist, an den Mikrocontroller weitergegeben. Zudem wird der Wert invertiert und über eine weitere Leitung, die mit RX-INVERT gekennzeichnet ist, an den Mikrocontroller weitergereicht.

Der Schwellwert am negativen Eingang von IC2A kann über die Schaltung zur Schwellwertanpassung 34 variabel festgelegt werden. Dies erfolgt über die Signale "Control3" und "Control4" an den beiden Schaltungen R8, T4 und R9, T5. Hierdurch sind drei verschiedene Schwellwerte auswählbar. Weitere Schwellwerte können ausgewählt werden, wenn zwischen R9 und GND zusätzliche Widerstände mit je einem Transistor vorgesehen sind.

Das erfindungsgemäße Verfahren ergibt sich durch Betrieb der erfindungsgemäßen Vorrichtung 1. Hierdurch kann vorteilhafterweise eine Kommunikation mit einer Vielzahl verschiedenartiger Heizungs- und/oder Kühlanlagen erreicht werden. Die dabei erforderlichen technischen Mittel werden verhältnismäßig kostengünstig gehalten, indem ein einziges Bussystem 11, 12 für Digitalsignale verschiedener Pegel genutzt werden kann.

## Patentansprüche

1. Vorrichtung zum Steuern einer Heizungs- und/oder Kühlanlage
mit einer Kommunikationsschnittstelle (10) zum Anschließen an eine Heizungs- und/oder Kühlanlage und
mit elektronischen Steuerungsmitteln (20, 30, 50, 60) zum Ausgeben eines Steuerwerts über die Kommunikationsschnittstelle (10) an die Heizungs- und/oder Kühlanlage und zum Verarbeiten von Eingangssignalen, die an der Kommunikationsschnittstelle (10) von der Heizungs- und/oder Kühlanlage empfangen werden,
**dadurch gekennzeichnet,**
**dass** zum Lesen von digitalen Eingangssignalen verschiedener Heizungs- und/oder Kühlanlagen die elektronischen Steuerungsmittel (20, 30, 50, 60) dazu eingerichtet sind,
- einen Schwellwert zum Unterscheiden zwischen einem hohen und einem niedrigen Pegel des digitalen Eingangssignals auswählbar festzulegen und
- das digitale Eingangssignal mit dem ausgewählten Schwellwert zu vergleichen.

2. Vorrichtung nach Anspruch 1,
**dadurch gekennzeichnet,**
**dass** die elektronischen Steuerungsmittel (20, 30, 50, 60) eingerichtet sind zum auswählbaren Ausgeben eines Steuerwerts in einer Form aus mindestens zwei der folgenden Formen:
- als analoge Ausgangsspannung, deren Höhe abhängig von dem Steuerwert gewählt wird,
- als digitales Spannungssignal, wobei der Steuerwert durch eine Folge von hohen und niedrigen Spannungspegeln kodiert ist,
- als digitales Stromsignal, wobei der Steuerwert durch eine Folge von hohen und niedrigen Strompegeln kodiert ist.

3. Vorrichtung nach Anspruch 2,
**dadurch gekennzeichnet,**
**dass** die elektronischen Steuerungsmittel (20, 30, 50, 60) dazu eingerichtet sind, bei einer Ausgabe des Steuerwerts als digitales Stromsignal den hohen und/oder niedrigen Strompegel auswählbar festzulegen.

4. Vorrichtung nach einem der vorausgehenden Ansprüche,
**dadurch gekennzeichnet,**
**dass** die Kommunikationsschnittstelle (10) Anschlussklemmen (11, 12, 13) zum Anschließen von Adern der Heizungs- und/oder Kühlanlage aufweist und dass zum Empfangen von verschiedenen digitalen Eingangssignalen, die sich in der Höhe ihrer hohen und/oder niedrigen Signalpegel unterscheiden, und zum Weiterleiten dieser Eingangssignale zu den elektronischen Steuerungsmitteln (20, 30, 50, 60) dieselben Anschlussklemmen (11, 12, 13) genutzt werden.

5. Vorrichtung nach einem der vorausgehenden Ansprüche,
**dadurch gekennzeichnet,**
**dass** elektronische Energieverteilungsmittel (80) vorgesehen sind, welche dazu eingerichtet sind, eine Stromversorgung von elektronischen Komponenten (30, 60, 65, 70) der Vorrichtung durch ein Eingangssignal, das an der Kommunikationsschnittstelle (10) empfangen wird, bereitzustellen, und dass die elektronischen Energieverteilungsmittel (80) eine Strombegrenzungsschaltung (84) aufweisen, die zum Vermeiden eines Spannungszusammenbruchs des Eingangssignals eine Stromversorgung durch das Eingangssignal auf einen vorgegebenen Maximalwert begrenzen.

6. Vorrichtung nach Anspruch 5,
**dadurch gekennzeichnet,**
**dass** ein Energiespeicher (96) vorgesehen ist,
**dass** die Energieverteilungsmittel (80) dazu eingerichtet sind, den Energiespeicher (96) durch Energie aus dem Eingangssignal zu laden, und dass die Energieverteilungsmittel (80) dazu eingerichtet sind, die elektronischen Komponenten (30, 60, 65, 70) der Vorrichtung mit Energie aus dem Energiespeicher (96) zu versorgen, wenn eine von den elektronischen Komponenten (30, 60, 65, 70) momentan geforderte Leistung eine über die Strombegrenzungsschaltung (84) bereitgestellte maximale Leistung übersteigt.

7. Vorrichtung nach Anspruch 6,
**dadurch gekennzeichnet,**
**dass** der Energiespeicher (96) ein Doppelschichtkondensator ist.

8. Vorrichtung nach Anspruch 6 oder 7,
**dadurch gekennzeichnet,**
**dass** zwischen der Strombegrenzungsschaltung (84) und dem Energiespeicher (96) eine Sicherheitsschaltung (92, 94) vorgesehen ist, welche dazu eingerichtet ist, eine zum Laden des Energiespeichers (96) genutzte Leistung auf einen Maximalwert zu begrenzen, der niedriger ist als die über die Strombegrenzungsschaltung (84) bereitgestellte maximale Leistung.

9. Vorrichtung nach Anspruch 8,
**dadurch gekennzeichnet,**
**dass** die Sicherheitsschaltung (92, 94) dazu eingerichtet ist, eine Energieversorgung von den elektronischen Komponenten (30, 60, 65, 70) durch den Energiespeicher (96) nur dann zu ermöglichen, wenn eine von dem Energiespeicher (96) bereitgestellte Spannung größer oder gleich einer vorgebbaren Grenzspannung ist, wobei die Grenzspannung größer oder gleich einer Betriebsspannung von elektronischen Komponenten (30, 60, 65, 70) der Vorrichtung ist.

10. Vorrichtung nach einem der Ansprüche 6 bis 9,
**dadurch gekennzeichnet,**
**dass** die Energieverteilungsschaltung (80) als Verpolungsschutz einen Gleichrichter (15) aufweist zum Gleichrichten einer Eingangsspannung an der Kommunikationsschnittstelle (10).

11. Vorrichtung nach einem der vorausgehenden Ansprüche,
**dadurch gekennzeichnet,**
**dass** zum Verarbeiten verschiedener digitaler Eingangssignale, bei denen eine Zuordnung des hohen und des niedrigen Signalpegels zueinander vertauscht sind, die elektronischen Steuerungsmittel (30) dazu eingerichtet sind, nach einem Vergleich des Eingangssignals mit dem Schwellwert das resultierende Signal zu invertieren und zur weiteren Signalverarbeitung das resultierende Signal sowohl invertiert als auch nicht invertiert weiterzugeben.

12. Vorrichtung nach einem der vorausgehenden Ansprüche,
**dadurch gekennzeichnet,**
**dass** die elektronischen Steuerungsmittel (20, 30, 50, 60) dazu eingerichtet sind, basierend auf einer Analyse des Eingangssignals automatisch eine Auswahl des Schwellwerts vorzunehmen.

13. Verfahren zum Steuern einer Heizungs- und/oder Kühlanlage,
bei dem ein Steuerwert von elektronischen Steuerungsmitteln (20, 30, 50, 60) einer Vorrichtung zum Steuern einer Heizungs- und/oder Kühlanlage erzeugt wird,
bei dem der Steuerwert an eine Kommunikationsschnittstelle (10) der Vorrichtung zum Steuern einer Heizungs- und/oder Kühlanlage geleitet wird, wobei an die Kommunikationsschnittstelle (10) eine Heizungs- und/oder Kühlanlage angeschlossen ist zum Empfangen des Steuerwerts, und bei dem von der Heizungs- und/oder Kühlanlage ein digitales Eingangssignal an die Kommunikationsschnittstelle (10) gesendet wird,
**dadurch gekennzeichnet,**
**dass** zum Lesen von digitalen Eingangssignalen verschiedener Heizungs- und/oder Kühlanlagen
- ein Schwellwert zum Unterscheiden zwischen einem hohen und einem niedrigen Pegel des digitalen Eingangssignals gemäß einer Auswahl festgelegt wird und
- das digitale Eingangssignal mit dem ausgewählten Schwellwert verglichen wird.

## Claims

1. Device for controlling a heating and/or cooling apparatus comprising
a communication interface (10) for connecting to a heating and/or cooling apparatus, and
electronic control means (20, 30, 50, 60) for outputting a control value via the communication interface (10) to the heating and/or cooling apparatus and for processing input signals which are received at the communication interface (10) of the heating and/or cooling apparatus,
**characterized in that**
for reading digital input signals of different heating and/or cooling apparatuses, the electronic control means (20, 30, 50, 60) are configured:
- to selectably set a threshold value for differentiating between a high level and a low level of the digital input signal, and
- to compare the digital input signal with the selected threshold value.

2. Device according to claim 1,
**characterized in that**
the electronic control means (20, 30, 50, 60) are configured to output a control value in a selectable form out of a group of at least two of the following forms:
- as an analog output voltage which has a height that is chosen in dependence of the control value,
- as a digital voltage signal, wherein the control value is encoded as a sequence of high and low voltage levels,
- as a digital current signal, wherein the control value is encoded as a sequence of high and low current levels.

3. Device according to claim 2,
**characterized in that**
the electronic control means (20, 30, 50, 60) are configured to selectably set the high and/or low current level, when outputting the control value as a digital current signal.

4. Device according to any one of the preceding claims,
**characterized in that**
the communication interface (10) comprises connection clamps (11, 12, 13) for connecting wires of the heating and/or cooling apparatus, and
the same connection clamps (11, 12, 13) are used both for receiving different digital input signals which vary in the heights of their respective high signal level and/or low signal level, and for forwarding these input signals to the electronic control means (20, 30, 50, 60).

5. Device according to any one of the preceding claims,
**characterized in that**
electronic energy distribution means (80) are provided which are configured to provide a current supply of electronic components (30, 60, 65, 70) of the device by means of an input signal which is received at the communication interface (10), and the electronic energy distribution means (80) comprises a current limiting circuit (84) which limits a current supply through the input signal to a predefined maximum value in order to avoid a voltage breakdown.

6. Device according to claim 5,
**characterized in that**
an energy storage (96) is provided,
the energy distribution means (80) is configured to charge the energy storage (96) with energy from the input signal, and
the energy distribution means (80) is configured to supply the electronic components (30, 60, 65, 70) of the device with energy from the energy storage (96) if a power momentarily required by one of the electronic components (30, 60, 65, 70) exceeds a maximum power provided by the current limiting circuit (84).

7. Device according to claim 6,
**characterized in that**
the energy storage (96) is a double layer capacitor.

8. Device according to claim 6 or 7,
**characterized in that**
a security circuit (92, 94) is provided between the current limiting circuit (84) and the energy storage (96), and the security circuit (92, 94) is configured to limit a power used to charge the energy storage (96) to a maximum value which is lower than the maximum power provided by the current limiting circuit (84).

9. Device according to claim 8,
**characterized in that**
the security circuit (92, 94) is configured to allow a power supply of the electronic components (30, 60, 65, 70) by means of the energy storage (96) only if a voltage provided by the energy storage (96) is larger than or equal to a predefined threshold voltage, wherein the threshold voltage is larger than or equal to an operating voltage of electronic components (30, 60, 65, 70) of the device.

10. Device according to any one of the claims 6 to 9,
**characterized in that**,
the energy distribution means (80) comprises a rectifier (15) as a reverse polarity protection, for rectifying an input voltage at the communication interface (10).

11. Device according to any one of the preceding claims,
**characterized in that**
for processing different digital input signals for which an assignment of the high signal level and the low signal level are swapped, the electronic control means (30) are configured to invert the signal resulting from a comparison of the input signal with the threshold value, and forward the resulting signal both inverted and not inverted for further signal processing.

12. Device according to any one of the preceding claims,
**characterized in that**
the electronic control means (20, 30, 50, 60) are configured to automatically make a selection of the threshold value based on an analysis of the input signal.

13. Method for controlling a heating and/or cooling apparatus, the method comprising:
generating a control value with electronic control means (20, 30, 50, 60) of a device for controlling a heating and/or cooling apparatus,
forwarding the control value to a communication interface (10) of the device for controlling a heating and/or cooling apparatus,
wherein a heating and/or cooling apparatus is connected to the communication interface (10) for receiving the control value, and
transmitting a digital input signal from the heating and/or cooling apparatus to the communication interface (10),
**characterized in that**
for reading digital input signals of different heating and/or cooling apparatuses:
- setting a threshold value for differentiating between a high level and a low level of the digital input signal according to a selection, and
- comparing the digital input signal with the selected threshold value.

## Revendications

1. Dispositif pour commander une installation de chauffage et/ou de refroidissement comprenant une interface de communication (10) pour la connexion à une installation de chauffage et/ou de refroidissement et
des moyens de commande électroniques (20, 30, 50, 60) pour fournir une valeur de commande par le biais de l'interface de communication (10) à l'installation de chauffage et/ou de refroidissement et pour le traitement de signaux d'entrée qui sont reçus, au niveau de l'interface de communication (10) de l'installation de chauffage et/ou de refroidissement,
**caractérisé en ce que**
pour la lecture de signaux d'entrée numériques de différentes installations de chauffage et/ou de refroidissement, les moyens de commande électroniques (20, 30, 50, 60) sont configurés pour
- fixer de manière sélectionnable une valeur seuil pour différencier entre un niveau élevé et un niveau faible du signal d'entrée numérique et
- comparer le signal d'entrée numérique avec la valeur seuil sélectionnée.

2. Le dispositif selon la revendication 1,
**caractérisé en ce que**
les moyens de commande électroniques (20, 30, 50, 60) sont configurés pour fournir de manière sélectionnable une valeur de commande sous une forme parmi au moins deux des formes suivantes :
- en tant que tension de sortie analogue dont le niveau est sélectionné en fonction de la valeur de commande,
- en tant que signal de tension numérique, la valeur de commande étant codée par une série de niveaux de tension élevés et faibles,
- en tant que signal électrique numérique, la valeur de commande étant codée par une série de niveaux de courant élevés et faibles,

3. Le dispositif selon la revendication 2,
**caractérisé en ce que**
les moyens de commande électroniques (20, 30, 50, 60) sont configurés pour fixer de manière sélectionnable le niveau de courant élevé et/ou faible lors de la fourniture de la valeur de commande en tant que signal de courant numérique.

4. Dispositif selon l'une des revendications précédentes
**caractérisé en ce que**
l'interface de communication (10) présente des bornes de connexion (11, 12, 13) pour la connexion de fils de l'installation de chauffage et/ou de refroidissement et **en ce que** les mêmes bornes de connexion (11, 12, 13) sont utilisées pour la réception de différents signaux d'entrée numériques, lesquels se distinguent quant à la hauteur de leur niveau de signal élevé et/ou faible, et pour transférer ces signaux d'entrée aux moyens de commande électroniques (20, 30, 50, 60).

5. Procédé selon l'une des revendications précédentes
**caractérisé en ce que**
sont prévus des moyens de distribution d'énergie électroniques (80) qui sont configurés pour fournir une alimentation électrique de composants électroniques (30, 60, 65, 70) du dispositif par le biais d'un signal d'entrée, lequel est reçu au niveau de l'interface de communication (10), et **en ce que** les moyens de distribution d'énergie électroniques (80) présentent un circuit de limitation de courant (84), qui limite une alimentation électrique par le biais du signal d'entrée à une valeur maximale prédéterminée afin d'empêcher un effondrement de la tension du signal d'entrée.

6. Dispositif selon la revendication 5,
**caractérisé en ce que**
un accumulateur d'énergie (96) est prévu,
les moyens de distribution d'énergie (80) sont configurés de sorte à charger l'accumulateur d'énergie (96) par de l'énergie provenant du signal d'entrée, et les moyens de distribution d'énergie (80) sont configurés de sorte à alimenter les composants électriques (30, 60, 65, 70) du dispositif avec de l'énergie provenant de l'accumulateur d'énergie (96), lorsqu'une performance exigée momentanément par les composants électriques (30, 60, 65, 70) dépasse une performance maximale fournie par le biais du circuit de limitation de courant (84).

7. Dispositif selon la revendication 6
**caractérisé en ce que**
l'accumulateur d'énergie (96) est un condensateur à double couche.

8. Dispositif selon la revendication 6 ou 7
**caractérisé en ce que**
entre le circuit de limitation de courant (84) et l'accumulateur d'énergie (96), un circuit de sécurité (92, 94) est prévu, lequel est configuré pour limiter une performance utilisée pour le chargement de l'accumulateur d'énergie (96) à une valeur maximale qui est plus basse que la performance maximale fournie par le biais du circuit de limitation de courant (84).

9. Dispositif selon la revendication 8
**caractérisé en ce que**
le circuit de sécurité (92, 94) est configuré pour ne permettre une alimentation en énergie des composants électroniques (30, 60, 65, 70) par le biais de l'accumulateur d'énergie (96) que lorsqu'une tension fournie par l'accumulateur d'énergie (96) est plus élevée ou directement une tension de seuil prédéterminée, la tension de seuil étant plus élevée ou directement une tension de fonctionnement de composants électroniques (30, 60, 65, 70) du dispositif.

10. Dispositif selon l'une des revendications 6 à 9
**caractérisé en ce que**
le circuit de distribution d'énergie (80) présente, en tant que protection contre l'inversion de polarité, un redresseur (15) pour redresser une tension d'entrée au niveau de l'interface de communication (10).

11. Dispositif selon l'une des revendications précédentes
**caractérisé en ce que**
pour le traitement de différents signaux d'entrée numériques, pour lesquels un agencement du niveau de signal élevé et du niveau de signal faible est inversé, les moyens de commande électroniques (30) sont configurés pour invertir, après une comparaison du signal d'entrée avec la valeur seuil, le signal résultant et, pour la poursuite du traitement du signal, pour transmettre le signal résultant aussi bien inversé que non inversé.

12. Dispositif selon l'une des revendications précédentes
**caractérisé en ce que**
les moyens de commande électroniques (20, 30, 50, 60) sont configurés pour effectuer automatiquement une sélection de la valeur seuil sur la base d'une analyse du signal d'entrée.

13. Dispositif pour commander une installation de chauffage et/ou de refroidissement, pour lequel une valeur de commande de moyens de commande électroniques (20, 30, 50, 60) est produite pour commander une installation de chauffage et/ou de refroidissement,
pour lequel la valeur de commande est transférée à une interface de communication (10) du dispositif pour commander une installation de chauffage et/ou de refroidissement,
tandis qu'une installation de chauffage et/ou de refroidissement est connectée à l'interface de communication (10) pour recevoir la valeur de commande et
pour lequel un signal d'entrée numérique est envoyé par l'installation de chauffage et/ou de refroidissement à l'interface de communication (10),
**caractérisé en ce que**
pour la lecture de signaux d'entrée numériques de différentes installations de chauffage et/ou de refroidissement,
- une valeur seuil est fixée pour différencier entre un niveau élevé et un niveau faible du signal d'entrée numérique conformément à une sélection,
- le signal d'entrée numérique est comparé avec la valeur seuil sélectionnée.
